# EUROPÄISCHE PATENTSCHRIFT

(11) **EP 2 181 919 B1**
(45) Veröffentlichungstag und Bekanntmachung des Hinweises auf die Patenterteilung: **22.10.2014**
(21) Anmeldenummer: 09171592.0
(22) Anmeldetag: 29.09.2009
(51) Int. Cl.: B63H 23/02, B63H 21/38, F16D 48/02, B63H 23/26, B63J 3/02, B63H 23/30, F01M 1/16, F16H 57/04

(54) **Hydraulische Steuerung für ein Schiffsgetriebe**
Hydraulic control for a ship transmission
Commande hydraulique pour une transmission de bateau

(30) Priorität: 29.10.2008 DE 102008043276
(43) Veröffentlichungstag der Anmeldung: 05.05.2010
(73) Patentinhaber: ZF Friedrichshafen AG, 88038 Friedrichshafen (DE)
(72) Erfinder: Stamml, Michael, 88356, Ostrach (DE)

(56) Entgegenhaltungen:
- EP-A2- 1 967 448
- EP-A2- 1 980 767

## Beschreibung

Die vorliegende Erfindung betrifft eine hydraulische Steuerung für ein Schiffsgetriebe gemäß der im Oberbegriff des Patentanspruches 1 näher definierten Art.

Hydraulische Steuerungen für Schiffsgetriebe umfassen üblicherweise unter anderem ein Systemdruckventil mit dem ein gewünschter Systemdruck eingestellt wird, um zum Beispiel die Kupplung des Schiffsgetriebes anzusteuern. Neben der Ansteuerung wird durch das Systemdruckventil auch der Schmiermittelkreislauf mit Schmiermittel, zum Beispiel Öl, versorgt. Dazu ist das Systemdruckventli mit seinem Auslass an den Schmiermittelkreislauf angeschlossen.

Für die Ölversorgung wird über die Antriebswelle eine Primärpumpe angetrieben, welche eine ausreichende Ölmenge mit einem vorbestimmten Systemdruck fördert. Wenn die Pumpe den entsprechenden Systemdruck und die entsprechende Fördermenge liefert, wird das Systemdruckventil geöffnet, so dass das Öl beziehungsweise Schmiermittel in den Schmiermittelkreislauf geleitet werden kann.

Jedoch wird über die Primärpumpe kein Öl gefördert, wenn sich die Antriebswelle nicht mehr dreht, z. B. wenn der Motor ausgeschaltet ist, da die Primärpumpe dann ebenfalls nicht angetrieben wird. Es ist jedoch möglich, dass trotz stehender Antriebswelle die Abtriebswelle in Drehung versetzt wird und somit auch die Komponenten des Getriebes bei stehender Antriebswelle geschmiert werden müssen. Das Drehen der Abtriebswelle kann zum Beispiel beim Abschleppen des Schiffes oder auch durch eine Strömung in einem Gewässer bewirkt werden, wodurch der Propeller des Schiffes in Rotation versetzt wird. In diesem Zustand kann die Primärpumpe kein Öl in den Schmiermittelkreislauf fördern. Für diesen Betriebszustand ist es bekannt, dass eine Schleppfahrtpumpe verwendet wird, die von der Abtriebswelle angetrieben wird und dann anstelle der Primärpumpe das erforderliche Schmiermittel liefert. Die Schleppfahrtpumpe ist jedoch zum eignen Schutz mit einem Überdruckventil kombiniert, welches bei einem Druck öffnet, der unterhalb des Systemdruckes liegt. Wird dieser Druck erreicht, wird das Schmiermittel in einen Getriebeölsumpf geleitet. Somit kann die Schleppfahrtpumpe nicht den Systemdruck aufbringen, der das Systemdruckventil zur Schmiermittelversorgung öffnet.

Der vorliegenden Erfindung liegt somit die Aufgabe zu Grunde eine hydraulische Steuerung gemäß der eingangs beschriebenen Gattung vorzuschlagen, welche derart modifiziert wird, dass eine Schmiermittelversorgung auch bei einem Motorstillstand und bei sich drehender Abtriebswelle sichergestellt wird, um die Komponenten des Schiffsgetriebes auch in diesem Zustand mit Schmiermittel zu versorgen.

Diese Aufgabe wird erfindungsgemäß durch die Merkmale des Patentanspruches 1 gelöst. Weitere vorteilhafte Ausgestaltungen ergeben sich aus den Unteransprüchen und den Zeichnungen.

Demnach wird eine hydraulische Steuerung für ein Schiffsgetriebe mit zumindest einem Systemdruckventil zum Einstellen eines vorbestimmten Systemdruckes und zur Schmiermittelversorgung im Fahrbetrieb vorgeschlagen, wobei das Systemdruckventil mit einer von einer Antriebswelle angetriebenen Primärpumpe verbunden ist und wobei eine von einer Abtriebswelle angetriebene Schleppfahrtpumpe zur Schmiermittelversorgung zumindest im Schleppfahrbetrieb parallel zu der Primärpumpe geschaltet bzw. angeordnet ist. Erfindungsgemäß ist zumindest ein schmiermittelmengengesteuertes bzw. ölmengengesteuertes Steuerventil oder dergleichen zur Schmiermittelversorgung bei sich drehender Abtriebswelle vorgesehen. Das Steuerventil kann auch als Schleppfahrtventil bezeichnet werden.

Durch das Verwenden eines zusätzlichen Steuerventils bei der gattungsgemäßen Steuerung für das Schiffsgetriebe kann die Schmiermittelversorgung beziehungsweise Ölversorgung des Getriebes z. B. auch bei nicht ausreichend oder nicht angetriebener Primärpumpe sichergestellt werden.

Um ein Schließen des Steuerventils im normalen Fahrbetrieb und ein Öffnen des Steuerventils bei stehender beziehungsweise nicht ausreichend angetriebener Antriebswelle, also bei nicht beziehungsweise nicht ausreichend angetriebener Primärpumpe, sicherzustellen, kann gemäß einer Weiterbildung der Erfindung vorgesehen sein, dass das Steuerventil in Abhängigkeit des Druckes beziehungsweise der Fördermenge angesteuert wird. Demnach wird das Steuerventil unterhalb einer vorbestimmten Mindestfördermenge der Primärpumpe zur Schmiermittelversorgung geöffnet und bei Erreichen oder Übersteigen der Mindestfördermenge wieder geschlossen.

Gemäß einer nächsten Ausgestaltung der Erfindung kann zum Realisieren des gewünschten Schließ- beziehungsweise Öffnungsverhalten bei dem Steuerventil vorgesehen sein, dass das Steuerventil federbelastet und mit einer Blende am Auslass oder dergleichen ausgeführt ist. Durch die Blende wird bei Erhöhung des Förderstromes der entsprechende Schließdruck erreicht, bei dem das Steuerventil geschlossen wird, wenn die Primärpumpe die entsprechende Ölmenge fördert. Die Feder kann so eingestellt werden, dass bei Erreichen eines Druckes, der einer Ölmenge entspricht, die größer ist als eine Mindestfördermenge der Primärpumpe zum Beispiel bei einer Leerlaufdrehzahl des Motors, der Kolben des Steuerventils in seine Schließstellung bewegt wird. Somit fließt kein Öl mehr über das Schleppfahrtventil beziehungsweise Steuerventil in den Schmiermittelkreislauf. Demzufolge wird das Steuerventil von dem Systemdruckventil überbrückt und die Steuerung des Schmieröls erfolgt wieder über das Systemdruckventil. Das Schleppfahrtventil beziehungsweise Steuerventil kann auf einfachste Weise auf verschiedene Drücke und Fördermengen eingestellt werden. Somit kann der Schließdruck über die Druckfeder und die Ölschließmenge über die Blende eingestellt werden. In vorteilhafter Weise kann dadurch das Steuerventil universell auf verschiedene Getriebetypen mit unterschiedlichen Pumpen und Fördermengen angepasst werden.

Bei dem Systemdruckventil wird der Auslass, der an die Schmiermittelversorgung bzw. den Schmiermittelkreislauf angeschlossen ist, über eine Feder solange verschlossen, bis ein vorbestimmter Systemdruck erreicht wird. Da der Einlass des Steuerventils mit dem Einlass des Systemdruckventils verbunden ist, kann bei einem Druck unterhalb des Systemdruckes das Schmiermittel über den Einlass des Systemdruckventils in das Steuerventil gefördert werden. Da der mit der Schmiermittelversorgung verbundene Auslass des Systemdruckventils auch mit dem Auslass des Steuerventils verbunden ist, kann somit eine Schmiermittelversorgung über das Steuerventil unterhalb des Systemdruckes realisiert werden.

Im Rahmen einer vorteilhaften Ausführungsvariante der Erfindung kann vorgesehen sein, dass die Schleppfahrtpumpe über eine Schmiermittelaufbereitungseinrichtung mit dem Systemdruckventil und dem nachgeschalteten Steuerventil beziehungsweise Schleppfahrtventil verbunden ist. Auf diese Weise wird verhindert, dass die Schleppfahrtpumpe direkt mit dem Schmiermittelkreislauf verbunden ist. Dies hat den Vorteil, dass das Öl beziehungsweise Schmiermittel über die Schmiermittelaufbereitungseinrichtung gefördert wird. Auf diese Weise wird nur zum Beispiel gekühltes und gefiltertes Schmiermittel in den Schmiermittelkreislauf gefördert, so dass Schäden am Getriebe dadurch verhindert werden.

Bei speziellen Anwendungen kann das Öl auch im Schleppfahrtventil stark erwärmen werden. Wenn das Öl dann nicht über den Kühler der Aufbereitungseinrichtung fließt, kann dessen Kühlwirkung nicht genutzt werden. Ohne das erfindungsgemäße Schleppfahrtventil wäre also ein zusätzlicher Filter und in manchen Fällen auch ein zusätzlicher Kühler erforderlich, welches zu höheren Kosten, zu einem höheren Montageaufwand und Wartungsaufwand sowie zu einer Erhöhung der Dichtstellen am Getriebe führt. Diese zusätzlichen Maßnahmen können bei der erfindungsgemäß vorgeschlagenen Steuerung eingespart werden.

Um eine besonders kompakte und kostengünstige Ausgestaltung der erfindungsgemäß vorgeschlagenen Ansteuerung zu realisieren, kann vorgesehen sein, dass die Steuerung als kompakter Steuerblock ausgebildet ist, an dem als Zusatzmodul das Steuerventil beziehungsweise Schleppfahrtventil einfach aufgesetzt wird. Dadurch sind keine aufwändigen Gehäuseänderungen erforderlich, so dass an der Steuerung keine bzw. geringe Zusatzkosten anfallen. Zu dem kann im Bedarfsfall das Steuerventil mit sehr geringem Montageaufwand auf einfachste Weise nachgerüstet werden.

Nachfolgend wird die Erfindung anhand der Zeichnung weiter erläutert.

Es zeigen:
- Fig. 1: ein mögliches Schaltschema einer hydraulischen Steuerung für ein Schiffsgetriebe;
- Fig. 2: eine perspektivische Ansicht der als Steuerblock ausgebildeten Steuerung mit einem Systemdruckventil und einem zusätzlichen Schleppfahrtventlil;
- Fig. 3: eine perspektivische Ansicht des Steuerblocks ohne das Schleppfahrtventil; und
- Fig. 4: eine geschnittene Ansicht des Steuerblock mit dem Systemdruckventil und dem Schleppfahrtventil.

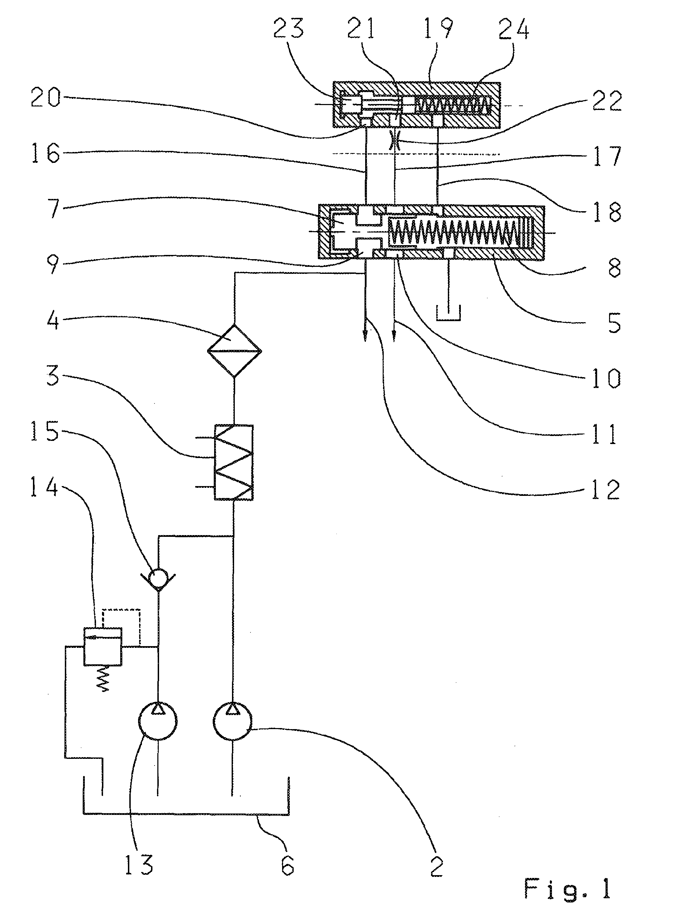

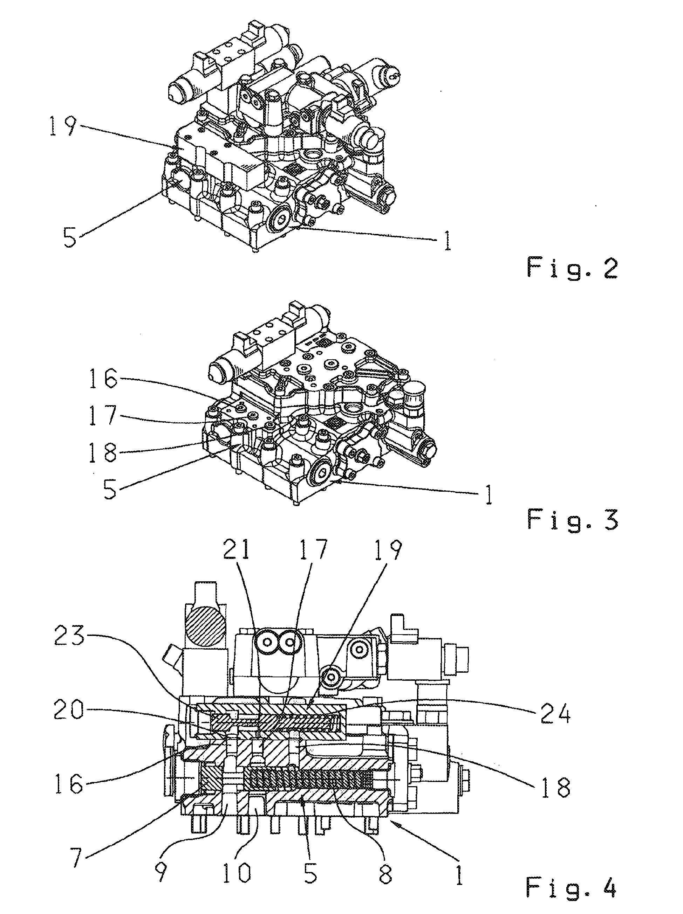

In Figur 1 ist ein mögliches Ausführungsbeispiel einer erfindungsgemäßen hydraulischen Steuerung für ein Schiffsgetriebe exemplarisch in Form eines Schaltschemas dargestellt. Die Steuerung wird vorzugsweise, wie in den Figuren 2 bis 4 ersichtlich ist, als kompakter Steuerblock 1 ausgebildet.

Figur 1 ist zu entnehmen, dass die Steuerung eine Primärpumpe 2 umfasst, die über einen Kühler 3 und einen Filter 4 als Aufbereitungseinrichtung mit einem Systemdruckventil 5 verbunden ist. Die Primärpumpe 2 fördert Schmiermittel beziehungsweise Öl aus einem Getriebeölsumpf 6 zu dem Systemdruckventil. Die Primärpumpe 2 wird von einer Antriebswelle, welche nicht weiter dargestellt ist, angetrieben. Ein Kolben 7 des Systemdruckventils 5 wird über einen Einlass 9 gegen die Kraft einer Druckfeder 8 mit Öl beaufschlagt, so dass bei Erreichen eines vorbestimmten Systemdruckes, von z.B. 17,19 oder 21,5 bar, das Systemdruckventil 5 geöffnet wird. Im geöffneten Zustand des Systemdruckventils 5, also bei Anliegen des Systemdruckes, gibt der Kolben 7 des Systemdruckventils 5 den Auslass 10 des Systemdruckventils 5 frei, so dass Öl in den Schmiermittelkreislauf gelangen kann, welches durch den Pfeil 11 angedeutet ist. Der Einlass 9 des Systemdruckventils 5 ist auch zum Beispiel mit einer Kupplung des Getriebes verbunden, um diese mit dem Systemdruck zur Ansteuerung zu beaufschlagen. Dies wird durch den Pfeil 12 angedeutet.

Mit der Primärpumpe 2 wird im normalen Fahrbetrieb die Schmierölförderung für das Systemdruckventil 5 vorgenommen. Wenn sich der Motor im Stillstand befindet und die Antriebswelle nicht angetrieben wird, wird die Schmiermittelversorgung über eine Schleppfahrtpumpe 13 realisiert. Die Schleppfahrtpumpe 13 ist parallel zu der Primärpumpe 2 geschaltet und umfasst zum Schutz ein Überdruckventil 14, welches bei einem Druck von z. B. 12 bar öffnet, so dass das Öl in den Getriebeölsumpf 6 geleitet wird. Die Schleppfahrtpumpe 13 ist über ein Rückschlagventil 15 und über den Ölkühler 3 sowie den Filter 4 mit dem Einlass 9 des Systemdruckventils 5 verbunden. Die Schleppfahrtpumpe 13 wird über die Abtriebswelle des Getriebes angetrieben, wenn das Schiff zum Beispiel geschleppt wird oder der Propeller durch eine Strömung im Gewässer in Drehung versetzt wird.

Erfindungsgemäß ist vorgesehen, dass das Systemdruckventil über z. B. drei Anschlussleitungen 16, 17,18 mit einem zusätzlichen schmiermittelmengengesteuertes Steuerventil beziehungsweise Schleppfahrtventil 19 verbunden. Mit der Anschlussleitung 16 ist der Einlass 9 des Systemdruckventils 5 mit dem Einlass 20 des Schleppfahrtventils 19 verbunden. Über die Anschlussleitung 17 ist der Auslass 10 des Systemdruckventils 5 mit dem Auslass 21 des Schleppfahrtventils 19 verbunden. Schließlich dient die Anschlussleitung 18 als Entlüftung.

Wenn der Systemdruck zum Öffnen des Systemdruckventils 5 nicht erreicht wird, da die Primärpumpe nicht angetrieben wird, wird über die Schleppfahrtpumpe 13 eine ausreichende Fördermenge des Schmiermittels zu dem Schmiermittelkreislauf gefördert, wobei die Fördermenge jedoch unter der Mindestfördermenge der Primärpumpe 2 liegt. Die Mindestfördermenge kann beispielsweise der Fördermenge bei Leerlaufdrehzahl des Antriebsmotors entsprechen.

Bei einer Fördermenge unterhalb der Mhdestfördermenge wird der Kolben 7 des Systemdruckventils 5 nicht bewegt. Das von der Schleppfahrtpumpe 13 geförderte Öl kann über die Anschlussleitung 16 durch den Einlass 20 in das Schleppfahrtventil 19 strömen. Durch den Auslass 21 des Schleppfahrtventils 19 kann das Öl über die Anschlussleitung 17 und den Auslass 10 des Systemdruckventils 5 dem Schmiermittelkreislauf 11 zugeführt werden.

In der Anschlussleitung 17 ist eine Blende 22 angeordnet, die eine Druckerhöhung in dem Schleppfahrtventil 19 erzeugt. Der resultierende Druck wirkt auf den Kolben 23 des Schleppfahrtventlis gegen die Federkraft der Druckfeder 24. Dies bedeutet, dass, wenn die Fördermenge die Mindestfördermenge der Primärpumpe 2 erreicht, z.B. wenn die Primärpumpe wieder angetrieben wird, der daraus resultierende Druck das Verschieben des Kolbens 23 bewirkt, sodass zumindest der Einlass 20 des Schleppfahrtventils 19 verschlossen wird.

Somit kann mit dem ölmengengesteuerten Schleppfahrtventil 19 sichergestellt werden, dass auch die Ölversorgung für den Schmiermittelkreislauf realisiert wird, wenn kein ausreichender Antrieb der Primärpumpe vorliegt. Wenn die Antriebswelle über den Motor wieder ausreichend angetrieben wird und z. B. die Leerlaufdrehzahl erreicht wird, kann die Primärpumpe 2 wieder ihre Mindestfördermenge liefern, so dass dann das Schleppfahrtventil 19 aufgrund des ansteigenden Druckes infolge der höheren Ölmenge geschlossen wird.

Die Figuren 2 und 3 zeigen perspektivische Ansicht des Steuerblocks 1 der hydraulischen Steuerung, wobei in Figur 2 bereits das Schleppfahrtventil 19 auf den Steuerblock 1 im Bereich des Systemdruckventlis 5 aufgesetzt ist. In Figur 3 ist der Steuerblock 1 mit dem Systemdruckventil 5 ohne das Schleppfahrtventil 19 dargestellt. Figur 4 zeigt eine weitere geschnittene Ansicht des Systemdruckventils 5 und des Schleppfahrtventils 19 in dem Steuerblock 1. Diese Ansicht soll die in Figur 1 nur schematisch angedeutete Schnittdarstellung des Systemdruckventils 5 und des Schleppfahrtventils 19 ergänzen, wobei gleiche Bauteile mit gleichen Bezugszahlen wie in Figur 1 bezeichnet sind.

### Bezugszeichen

- 1: Steuerblock
- 2: Primärpumpe
- 3: Kühler
- 4: Filter
- 5: Systemdruckventil
- 6: Getriebeölsumpf
- 7: Kolben
- 8: Druckfeder
- 9: Einlass
- 10: Auslass
- 11: Pfeil (Schmiermittelkreislauf)
- 12: Pfeil (Steuerung Kupplung)
- 13: Schleppfahrtpumpe
- 14: Überdruckventil
- 15: Rückschlagventil
- 16: Anschlussleitung
- 17: Anschlussleitung
- 18: Anschlussleitung
- 19: Steuerventil beziehungsweise Schleppfahrtventil
- 20: Einlass
- 21: Auslass
- 22: Blende
- 23: Kolben
- 24: Druckfeder

## Patentansprüche

1. Hydraulische Steuerung (1) für ein Schiffsgetriebe mit zumindest einem Systemdruckventil (5) zum Einstellen eines vorbestimmten Systemdruckes und zur Schmiermittelversorgung im Fahrbetrieb, wobei das Systemdruckventil (5) mit einer von einer Antriebswelle angetriebenen Primärpumpe (2) verbunden ist, und wobei eine von einer Abtriebswelle angetriebene Schleppfahrtpumpe (13) zur Druckmittelversorgung im Schleppfahrbetrieb parallel zu der Primärpumpe (2) geschaltet ist, **dadurch gekennzeichnet, dass** zumindest ein schmiermittelmengengesteuertes Steuerventil (19) zur Schmiermittelversorgung bei drehender Abtriebswelle vorgesehen ist.

2. Hydraulische Steuerung nach Anspruch 1, **dadurch gekennzeichnet, dass** das Steuerventil (19) unterhalb einer vorbestimmten Mindestfördermenge der Primärpumpe (5) zur Schmiermittelversorgung geöffnet und zumindest bei Erreichen der Mindestfördermenge der Primärpumpe (5) geschlossen ist.

3. Hydraulische Steuerung nach Anspruch 2, **dadurch gekennzeichnet, dass** das Steuerventil (19) zur Einstellung des Schließdruckes federbelastet und mit einer Blende (22) am Auslass (21) ausgeführt ist.

4. Hydraulische Steuerung nach einem der vorangehenden Ansprüche, **dadurch gekennzeichnet, dass** der Einlass (20) des Steuerventils (19) mit dem Einlass (9) des Systemdruckventils (5) verbunden ist.

5. Hydraulische Steuerung nach einem der vorangehenden Ansprüche, **dadurch gekennzeichnet, dass** der mit dem Schmiermittelversorgung verbundene Auslass (10) des Systemdruckventils (5) mit dem Auslass (21) des Steuerventils (5) verbunden ist.

6. Hydraulische Steuerung nach einem der vorangehenden Ansprüche, **dadurch gekennzeichnet, dass** die Schleppfahrtpumpe (13) über einen Küchler (3) und einen Filter (4) mit dem Systemdruckventil (5) und dem nachgeschalteten Steuerventil (19) verbunden ist.

7. Hydraulische Steuerung nach einem der vorangehenden Ansprüche, **dadurch gekennzeichnet, dass** das Systemdruckventil (5) in einen Steuerblock (1) integriert ist, an dem das Steuerventil (19) als Zusatzmodul angeordnet ist.

## Claims

1. Hydraulic control (1) for a ship transmission, with at least one system pressure valve (5) for setting a predetermined system pressure and for the supply of lubricant in travel mode, the system pressure valve (5) being connected to a primary pump (2) driven by a drive shaft, and a towed-travel pump (13) driven by an output shaft being connected in parallel to the primary pump (2) for the supply of pressure medium in towed-travel mode, **characterized in that** at least one lubricant quantity-controlled control valve (19) is provided for the supply of lubricant when the output shaft is rotating.

2. Hydraulic control according to Claim 1, **characterized in that** the control valve (19) is opened for the supply of lubricant below a predetermined minimum delivery quantity of the primary pump (2) and is closed at least when the minimum delivery quantity of the primary pump (2) is reached.

3. Hydraulic control according to Claim 2, **characterized in that** the control valve (19) is springloaded for setting the closing pressure and is designed with a diaphragm (22) at the outlet (21).

4. Hydraulic control according to one of the preceding claims, **characterized in that** the inlet (20) of the control valve (19) is connected to the inlet (9) of the system pressure valve (5).

5. Hydraulic control according to one of the preceding claims, **characterized in that** the outlet (10), connected to the lubricant supply, of the system pressure valve (5) is connected to the outlet (21) of the control valve (19).

6. Hydraulic control according to one of the preceding claims, **characterized in that** the towed-travel pump (13) is connected to the system pressure valve (5) and to the following control valve (19) via a cooler (3) and a filter (4).

7. Hydraulic control according to one of the preceding claims, **characterized in that** the system pressure valve (5) is integrated into a control block (1) on which the control valve (19) is arranged as an additional module.

## Revendications

1. Commande hydraulique (1) pour une transmission de bateau, comprenant au moins une soupape de pression de système (5) pour l'ajustement d'une pression de système prédéterminée et pour l'alimentation en lubrifiant pendant le fonctionnement de conduite, la soupape de pression de système (5) étant connectée à une pompe primaire (2) entraînée par un arbre d'entraînement, et une pompe de remorquage (13) entraînée par un arbre de prise de force étant montée en parallèle à la pompe primaire (2) pour l'alimentation en fluide sous pression pendant le mode de remorquage, **caractérisée en ce qu'**au moins une soupape de commande (19) commandée par une quantité de lubrifiant est prévue pour l'alimentation en lubrifiant lorsque l'arbre de prise de force tourne.

2. Commande hydraulique selon la revendication 1, **caractérisée en ce que** la soupape de commande (19) est ouverte en dessous d'une quantité de refoulement minimale prédéterminée de la pompe primaire (2) pour l'alimentation en lubrifiant, et est fermée une fois que la quantité de refoulement minimale de la pompe primaire (2) est atteinte.

3. Commande hydraulique selon la revendication 2, **caractérisée en ce que** la soupape de commande (19) est sollicitée par ressort pour ajuster la pression de fermeture et est réalisée avec un diaphragme (22) au niveau de la sortie (21).

4. Commande hydraulique selon l'une quelconque des revendications précédentes, **caractérisée en ce que** l'entrée (20) de la soupape de commande (19) est connectée à l'entrée (9) de la soupape de pression de système (5).

5. Commande hydraulique selon l'une quelconque des revendications précédentes, **caractérisée en ce que** la sortie (10) de la soupape de pression de système (5) connectée à l'alimentation en lubrifiant est connectée à la sortie (21) de la soupape de commande (19).

6. Commande hydraulique selon l'une quelconque des revendications précédentes, **caractérisée en ce que** la pompe de remorquage (13) est connectée par le biais d'un radiateur (3) et d'un filtre (4) à la soupape de pression de système (5) et à la soupape de commande (19) montée en aval.

7. Commande hydraulique selon l'une quelconque des revendications précédentes, **caractérisée en ce que** la soupape de pression de système (5) est intégrée dans un bloc de commande (1) au niveau duquel la soupape de commande (19) est disposée en tant que module supplémentaire.
